# EUROPÄISCHE PATENTSCHRIFT

(11) **EP 0 588 246 B1**
(45) Veröffentlichungstag und Bekanntmachung des Hinweises auf die Patenterteilung: **08.10.1997**
(21) Anmeldenummer: 93114533.8
(22) Anmeldetag: 10.09.1993
(51) Int. Cl.: B29C 59/10

(54) **Verfahren und Vorrichtung zur Behandlung von endlosen Warenbahnen**
Method and apparatus for treatment of endless webs
Procédé et dispositif pour le traitement des bandes sans fin

(30) Priorität: 12.09.1992 DE 4230633
(43) Veröffentlichungstag der Anmeldung: 23.03.1994
(73) Patentinhaber: Amann & Söhne GmbH & Co., D-74355 Bönnigheim (DE)
(72) Erfinder: Truckenmüller, Kurt, D-74076 Heilbronn (DE); Räuchle, Eberhard, Dr., D-71686 Remseck (DE); Greifeneder, Karl, D-74076 Heilbronn (DE)
(74) Vertreter: Döring, Wolfgang, Dr.-Ing. Patentanwälte Hauck, Graalfs, Wehnert, Döring, Siemons

(56) Entgegenhaltungen:
- CH-A- 495 459
- DE-A- 1 494 269
- DE-A- 3 935 013
- GB-A- 842 104
- US-A- 3 353 988

## Beschreibung

Die vorliegende Erfindung betrifft ein Verfahren zur Behandlung einer endlosen Warenbahn mit den Merkmalen des Oberbegriffs des Patentanspruchs 1 sowie eine Vorrichtung zur Durchführung des Verfahrens mit den Merkmalen des Oberbegriffs des Patentanspruchs 21.

Um die Eigenschaften einer Warenbahn, so z.B. die Eigenschaften einer textilen Warenbahn, zu verändern, ist es bekannt, die textile Warenbahn mit einer geeigneten Ausrüstung zu versehen. Auf diesem Wege können beispielsweise Baumwollgewebe oder Baumwollwirkwaren schrumpfarm ausgerüstet oder Wollgewebe oder Wollwirkwaren filzfrei behandelt werden.

Ebenso können die Eigenschaften einer Kunststoffolie dadurch verändert werden, daß die Kunststoffolie verstreckt wird. Warenbahnen aus Gummi lassen sich dadurch modifizieren, daß das Gummi, beispielsweise durch eine thermische Behandlung, dreidimensional vernetzt wird.

Desweiteren sind aus der DE 39 35 013 A1 ein Verfahren sowie eine Vorrichtung zur Corona-Behandlung von Warenbahnen beschrieben, wobei die DE 39 35 013 A1 im Wesentlichen lehrt, durch Einhaltung bestimmter Betriebsbedingungen und durch Verwendung von lösungsmittelfreien Beschichtungen die Bildung von Ozon während der Corona-Entladung zu unterdrücken.

Auch die GB 842104 A beschreibt eine entsprechende Behandlung einer Warenbahn, wobei ein Polyethylen-Film einer elektrischen Entladung unterworfen wird. Um bei dem bekannten Verfahren einen entsprechenden elektrischen Funken zu erzeugen, ist zwischen der Spannungsquelle und der Vielzahl der Behandlungselektroden ein einziger Kondensator geschaltet, der jedoch dazu dient, Spannungsschwankungen zu eliminieren.

Ein Verfahren mit den Merkmalen des Oberbegriffs des Patentanspruchs 1 sowie eine Vorrichtung mit den Merkmalen des Oberbegriffs des Patentanspruchs 21 sind in der CH 495 459 A beschrieben, wobei das bekannte Verfahren bzw. die bekannte Vorrichtung zum Modifizieren der Oberfläche von Textilfasern verwendet wird. In Figur 3 der CH 495 459 A ist eine Ausführungsform der bekannten Vorrichtung abgebildet, bei der in jedem Stromversorgungskreislauf einer jeden Gegenelektrode wahlweise ein Widerstand, ein Kondensator oder ein Kondensator und ein Induktor vorgesehen ist. Hierbei läßt jedoch die CH 495 459 A völlig offen, zu welchem Zweck dieser Widerstand, dieser Kondensator bzw. dieser Kondensator und dieser Induktor im Stromversorgungskreislauf einer jeden Elektrode angeordnet ist.

Der zuvor aufgeführte Stand der Technik läßt völlig offen, bei welchen Entladungszeiten der Funken- und/oder kurzzeitigen Bogenentladung die bekannten Verfahren bzw. Vorrichtungen arbeiten. Lediglich die CH 495 459 weist darauf hin, daß durch eine Variation des Druckes des Auslösegases und durch Variation der Spannung zwischen den Elektroden die Art der Funkenentladung beeinflußt werden kann.

Die zuvor wiedergegebenen bekannten Verfahren weisen jedoch den Nachteil auf, daß sie recht aufwendig durchzuführen sind.

Der vorliegenden Erfindung liegt die Aufgabe zugrunde, ein Verfahren zur Behandlung einer endlosen Warenbahn zur Verfügung zu stellen, das eine besonders einfach auszuführende gewünschte Modifizierung der Eigenschaften der die Warenbahn bildenden Materialien erlaubt.

Diese Aufgabe wird erfindungsgemäß durch ein Verfahren mit den kennzeichnenden Merkmalen des Patentanspruchs 1 gelöst.

Das erfindungsgemäße Verfahren zur Behandlung einer endlosen Warenbahn, insbesondere aus Kunststoff, Gummi oder Textil, sieht vor, daß man die endlose Warenbahn mit einer vorgegebenen Geschwindigkeit durch eine Behandlungseinrichtung transportiert und dabei die endlose Warenbahn vollflächig oder nach einem vorgegebenen Muster einer Funken- und/oder einer kurzzeitigen Bogenentladung unterwirft.

Zur Erzeugung der Funken- und/oder kurzzeitigen Bogenentladung verwendet man bei dem erfindungsgemäßen Verfahren mindestens eine Elektrode sowie eine Vielzahl von Gegenelektroden, die elektrisch derart entkoppelt sind, daß jeder Gegenelektrode ein erster Kondensator oder ein Widerstand zugeordnet wird. Für die Brenndauer der Funken- und/oder kurzzeitigen Bogenentladung wählt man eine solche Zeit aus, die zwischen 10⁻¹ Sekunden und 10⁻⁸ Sekunden, vorzugsweise zwischen 10⁻⁶ Sekunden und 10⁻² Sekunden, variiert. Um bei dem erfindungsgemäßen Verfahren den zeitlichen Verlauf der Funken- und/oder kurzzeitigen Bogenentladung zu modulieren, wird jede Gegenelektrode über einen zweiten Kondensator mit der mindestens einen Elektrode verbunden.

Bedingt dadurch, daß bei dem erfindungsgemäßen Verfahren jede Gegenelektrode über einen zweiten Kondensator mit der mindestens einen Elektrode verbunden ist, kann der zeitliche Verlauf der Funken- und/oder kurzzeitigen Bogenentladung und somit der Frequenzbereich der Entladung zeitlich moduliert werden, wodurch das erfindungsgemäße Verfahren besonders einfach auf die gewünschte Modifizierung der Eigenschaften der die Warenbahn bildenden Materialien ermöglicht wird.

Das erfindungsgemäße Verfahren weist eine Reihe von weiteren Vorteilen auf. So erlaubt es beispielsweise, die entsprechend mit der Funken- und/oder Bogenentladung behandelten Oberflächenbereiche der Warenbahn aufzurauhen oder abzutragen, ohne daß es dabei erforderlich wird, eine entsprechende Chemikalie auf die zu verändernden Oberflächenbereiche der Warenbahn zu applizieren. Dies wiederum führt dazu, daß das erfindungsgemäße Verfahren besonders umweltfreundlich ist, da hierbei keine zusätzlich applizierten Chemikalien ins Abwasser oder in die Abluft gelangen. Wird das erfindungsgemäße Verfahren z.B. zum Aufrauhen der Oberflächen von Kunststoffolien verwendet, so bewirkt eine derartige Aufrauhung, daß die Haftung der aufgerauhten Oberfläche zu anderen Stoffen, beispielsweise Klebemitteln, Lackierungen, Compounds o. dgl., erheblich verbessert wird. Durch Einsatz des erfindungsgemäßen Verfahren kann desweiteren z.B. bei wollhaltigen Warenbahnen in den Oberflächenbereichen, in denen die Funken- und/oder kurzzeitige Bogenentladung auf die Oberfläche auftrifft, die Schuppenstruktur der Wolle derart abgetragen werden, daß ähnliche Effekte erreicht werden, wie dies durch die herkömmliche Chlorierung erreicht wird. Hierbei ist es jedoch im Vergleich zum bekannten Verfahren nicht erforderlich, daß die wollhaltigen Flächengebilde mit chlorhaltigen Lösungen behandelt werden, so daß das erfindungsgemäße Verfahren erheblich umweltverträglicher und wesentlich einfacher durchzuführen ist. Desweiteren konnte festgestellt werden, daß bei wollhaltigen textilen Warenbahnen neben der zuvor beschriebenen Veränderung der Schuppenstruktur auch die Oberfläche der das Flächengebilde bildenden Fasern oder Fäden durch Anwendung des erfindungsgemäßen Verfahrens verändert werden kann, wobei sich derartige Veränderungen abhängig von den jeweils gewählten Bedingungen, so z.B. der Energie der Entladung oder der Umgebungsatmosphäre während der Entladung, in einer Erhöhung oder Verringerung der Hydrophilie, in einem Verbessern der Anfärbbarkeit, in einem Verbessern der Bedruckbarkeit und/oder in einer verbesserten Permanenz von auf das textile Flächengebilde aufgebrachten Ausrüstungen ausdrückt. Auch lassen sich durch Beaufschlagung der Warenbahnen mit der Funken- und/oder Bogenentladungen partiell in diesen Bereichen Schrumpfvorgänge auslösen, so daß strukturierte Bereiche resultieren, wodurch der entsprechend behandelten Oberfläche ein vollflächiges oder teilweises Muster verliehen wird.

Desweiteren ist es beispielsweise bei baumwollhaltigen textilen Warenbahnen möglich, durch das erfindungsgemäße Verfahren die Benetzbarkeit der Warenbahnen zu erhöhen. Hier konnte überraschend festgestellt werden, daß bereits eine kurzzeitige Funken- und/oder Bogenentladung der textilen Warenbahn unter den vorstehend genannten Bedingungen dazu führt, daß die ansonsten hydrophobe baumwollhaltigen Flächengebilden, bei denen es sich um Rohware handelt, hervorragend netzten, so daß der Auftrag von entsprechenden Behandlungsflotten auf die Rohware ermöglicht wird, ohne daß hierfür eine hohe Konzentration an Netzmitteln erforderlich ist, wie dies der bisherige Stand der Technik notwendig macht. Eine derartige, durch Anwendung des erfindungsgemäßen Verfahrens hervorgerufene drastische Verbesserung der Netzfähigkeit wird darauf zurückgeführt, daß offensichtlich durch die Funken- und/oder kurzzeitige Bogenentladung die auf der Rohbaumwolle vorhandenen Faserbegleitstoffe, wie beispielsweise die natürlichen Fette, Öle, Schlichten und/oder Avivagen so weit verändert und/oder abgetragen werden, daß diese die Netzfähigkeit nicht mehr oder nur im untergeordneten Maße beeinflussen können, so daß die eigentlich hydrophile Baumwolle dann freiliegt und die zuvor beschriebene deutliche Verbesserung der Netzfähigkeit bewirkt wird. Dies wiederum hat zur Folge, daß Rohwaren aus baumwollhaltigen Warenbahnen sehr viel einfacher und schneller durch Anwendung des erfindungsgemäßen Verfahrens weiterverarbeitet werden können, so zum Beispiel abgekocht, gebleicht, gefärbt und/oder bedruckt. Auch hier trägt das erfindungsgemäße Verfahren wesentlich zur Verringerung der Umweltbelastung bei.

Ferner ist es möglich, durch Anwendung des erfindungsgemäßen Verfahrens die Haftung von Gummibahnen zu anderen Stoffen, beispielsweise Verstärkungseinlagen, zu verändern, so daß ein hieraus hergestelltes Compound eine längere Lebensdauer aufweist oder daß Abnutzungen infolge der Verschlechterung der Haftung zwischen der Verstärkungslage und der Gummibahn vermieden werden. Neben den zuvor beschriebenen physikalischen Veränderungen, die durch Anwendung des erfindungsgemäßen Verfahrens herbeizuführen sind, besteht desweiteren die Möglichkeit, auch die entsprechend mit der Funken- und/oder kurzzeitigen Bogenentladung behandelten Oberflächen der Warenbahn chemisch zu verändern. So können beispielsweise reaktive Zentren auf der Oberfläche der behandelten Warenbahn erzeugt werden, die dann entsprechend, beispielsweise mit Monomeren, reaktiven Oligomeren oder reaktionsfähigen Polymeren, unter Ausbildung einer chemisch modifizierten Oberfläche abreagieren. So lassen sich insbesondere hierdurch Beschichtungen auf der Oberfläche der Warenbahn erzeugen, die physikalisch und/oder insbesondere chemisch an das die Warenbahn bildende Material angebunden sind.

Eine erste Ausführungsform des erfindungsgemäßen Verfahrens sieht vor, daß man die Behandlung in einer Gasatmosphäre bei einem Druck zwischen 90 x 10³ Pa bis 110 x 10³ Pa, vorzugsweise bei einem Druck von etwa 10⁵ Pa und somit bei Normaldruck, ausführt. Als Gas kann hierbei wahlweise Luft, ein Inertgas oder ein reaktives Gas sowie eine Mischung der zuvor genannten Gase verwendet werden, wobei sich die Auswahl der Gasart danach richtet, welchen Effekt man mit dem erfindungsgemäßen Verfahren herbeiführen will. Soll beispielsweise die Oberfläche der behandelten Warenbahn physikalisch modifiziert werden, insbesondere aufgerauht oder abgetragen werden, so empfiehlt es sich, hier als Gasatmosphäre Luft und/oder ein Inertgas einzusetzen. Ist zusätzlich noch eine chemische Modifizierung der Oberfläche erwünscht, so gelangen vorzugsweise reaktive Gase, insbesondere Wasserstoff, Sauerstoff, Kohlenmonoxid, Silane allein oder in Mischung untereinander oder mit einem Inertgas zur Anwendung.

Ebenso ist es möglich, durch die Funken- und/oder kurzzeitige Bogenentladung die die Warenbahn bildenden Polymeren aufzuspalten und hierdurch polymereigene reaktive Zentren zu schaffen, die untereinander und/oder mit anderen Substanzen, beispielsweise den zuvor genannten Gasen, unter Ausbildung von modifizierten Polymeren reagieren, wodurch eine chemische und/oder physikalische Modifizierung der Warenbahn erreicht wird.

Bezüglich der Temperatur, die bei dem erfindungsgemäßen Verfahren während der Behandlung angewendet wird, ist festzuhalten, daß sich diese Temperatur ebenfalls nach den durch das erfindungsgemäße Verfahren erreichbaren Effekten richtet. Vorzugsweise wird bei dem erfindungsgemäßen Verfahren die Behandlung bei einer Temperatur zwischen 15°C und 200 °C, insbesondere bei einer Temperatur zwischen 20 °C und 60 °C, durchgeführt, so daß durch die zuvor genannten Temperaturen bei dem erfindungsgemäßen Verfahren keine unerwünschten Veränderungen, insbesondere kein unerwünschtes Schrumpfen, der jeweils behandelten Warenbahnen auftreten.

Wie bereits vorstehend ausgeführt ist, kann das erfindungsgemäße Verfahren auch insbesondere dazu eingesetzt werden, um die Haftung einer Ausrüstung zur behandelten Warenbahn zu verbessern. Hierbei kann man bei dem erfindungsgemäßen Verfahren derart arbeiten, daß man zunächst die Behandlung der Warenbahn mit der Funken- und/oder Bogenentladung vornimmt und anschließend die Ausrüstung, die vorzugsweise noch reaktive Zentren aufweist, auf die entsprechend behandelte Warenbahn aufbringt.

Bei einer besonders geeigneten Ausführungsform des erfindungsgemäßen Verfahrens imprägniert man jedoch die Warenbahn vor und/oder während der Behandlung mit der Funken- und/oder Bogenentladung mit mindestens einer Substanz (Ausrüstung), so daß man somit die mit der Substanz imprägnierte Warenbahn der Funken- und/oder Bogenentladung unterwirft. Hierdurch wird erreicht, daß durch die Funken- und/oder Bogenentladung auf der Oberfläche der Warenbahn und/oder in der Substanz, mit der die Warenbahn imprägniert worden ist oder wird, reaktive Zentren ausgebildet werden, die dann miteinander zur Reaktion gelangen und somit eine physikalisch und/oder insbesondere eine chemische Bindung der Substanz an die Oberfläche der Warenbahn bewirken. Derartig aufgebrachte und physikalisch und/oder chemisch angebundene Substanzen weisen dann eine hohe Haftung zur Warenbahn auf, so daß sich die Substanz in der Regel nicht ohne Zerstörung der Warenbahn von der Warenbahn entfernen läßt. Auf diese Weise können als Substanz die im textilen Bereich bekannten Ausrüstungen, wie beispielsweise Weichmacher, Antistatika, Flammfestmittel, antimikrobielle Ausrüstungen, schrumpffreie Ausrüstungen o. dgl., nach dem erfindungsgemäßen Verfahren auf textile Warenbahnen appliziert werden. Weiterhin ist es möglich, durch Anwendung des erfindungsgemäßen Verfahrens nach den zuvor beschriebenen Ausführungsvarianten Lacke, Klebemittel, Siliciumdioxid-Schichten oder Oberflächenversiegelungen auf Kunststoffolien oder Gummibahnen dauerhaft zu applizieren.

Eine andere, besonders vorteilhafte Ausgestaltung des erfindungsgemäßen Verfahrens sieht vor, daß man eine solche Substanz auswählt, die die Haftung einer Ausrüstung, beispielsweise eines Lackes, einer Oberflächenvergütung, einer Siliciumdioxid-Schicht o. dgl. zu der Warenbahn verbessert. Mit anderen Worten wird hierbei somit durch das erfindungsgemäße Verfahren zunächst eine Zwischenschicht auf der Oberfläche der Warenbahn erzeugt, die sicherstellt, daß eine hiernach aufgebrachte weitere Substanz eine hervorragende Haftung zur Warenbahn besitzt.

Eine Abwandlung der zuvor beschriebenen Ausführungsvariante des erfindungsgemäßen Verfahrens sieht vor, daß man mehrere Substanzen nacheinander schichtweise übereinanderliegend auf die Warenbahn aufbringt, so daß ein Verbundkörper (Compound) resultiert, der im Querschnitt gesehen mehrere, vorzugsweise zwei bis acht, übereinanderliegende Schichten aufweist.

Bei einer anderen Ausführungsform des erfindungsgemäßen Verfahrens imprägniert man während und/oder vor der Behandlung der Warenbahn die Warenbahn mit mindestens einem Initiator, der durch die Behandlung (Funken- und/oder kurzzeitige Bogenentladung) in Radikale und/oder Ionen zerfällt. Hierbei entstehen somit unmittelbar auf der Oberfläche der Warenbahn reaktionsfähige Teilchen (Radikale und/oder Ionen), die dann wahlweise mit dem Material, aus der die Warenbahn besteht, der gasförmigen Umgebungsatmosphäre der Warenbahn und/oder einer auf die Warenbahn aufgebrachten Substanz reagieren. Durch diese Ausführungsvariante des erfindungsgemäßen Verfahrens ist eine besonders einfache und kostengünstige physikalische und insbesondere auch chemische Modifizierung der Warenbahn möglich, wobei bei dieser Variante die zuvor genannten Substanzen und/oder die vorstehend beschriebenen Gase eingesetzt werden.

Grundsätzlich kann bei der zuvor beschriebenen Ausführungsform des erfindungsgemäßen Verfahrens jeder Initiator verwendet werden, der durch die Funken- und/oder kurzzeitige Bogenentladung derart modifiziert wird, daß er in Radikale und/oder Ionen zerfällt. Vorzugsweise bieten sich hierfür Initiatoren auf der Basis eines Persulfates, insbesondere Kaliumpersulfat und/oder Ammoniumpersulfat, eines Peroxides, insbesondere Dibenzoylperoxid, Cumolhydroperoxid, Cyclohexanonperoxid, Ditert-Butylperoxid, Cyclohexylsulfonylacetylperoxid, Initiatoren auf der Basis einer Azoverbindung, insbesondere Azodiisobuttersäurenitril, und/oder ein Initiator auf der Basis von Benzpinakol, Diisopropylpercarbonat und/oder tert.-Butylperoctoat an.

Weiterhin konnte festgestellt werden, daß bei dem erfindungsgemäßen Verfahren als Initiator auch ein Redoxsystem, insbesondere Kaliumpersulfat/Natriumhyposulfit, Wasserstoffperoxid/Eisen-II-Sulfat, Cumolhydroperoxid/Polyamin und/oder Benzoylperoxid/N-Dimethylanilin mit gutem Erfolg eingesetzt werden kann, da diese zuvor genannten Redoxsysteme in besonders hoher Ausbeute die vorstehend beschriebenen reaktiven Zentren ausbilden.

Bei einer Weiterbildung des erfindungsgemäßen Verfahrens quillt man die jeweils zu behandelnde Warenbahn während des Auftragens des Initiators und/oder der Substanz durch Aufbringen eines Quellmittels. Diese Variante erlaubt, daß die reaktiven Zentren, die aus dem Initiator durch die Funken- und/oder kurzzeitige Bogenentladung ausgebildet werden, sich ausschließlich oder teilweise im Inneren der Warenbahn aufgrund der vorherigen Quellung derselben befinden, so daß dementsprechend auch die zuvor beschriebenen Reaktionen ausschließlich oder teilweise im Inneren der Warenbahn ablaufen. Diese Variante bietet sich insbesondere dann an, wenn bei dem erfindungsgemäßen Verfahren eine textile Warenbahn eingesetzt wird, so daß die zuvor beschriebenen Reaktionen dann insbesondere in den Garnzwischenräumen, den Fadenzwischenräumen und/oder den Zwischenräumen, die zwischen Einzelfasern bestehen, die das Garn ausbilden, aus denen das textile Flächengebilde erstellt ist, stattfinden.

Eine andere Ausführungsform des erfindungsgemäßen Verfahrens sieht vor, daß der mindestens eine Initiator zusammen mit der mindestens einen Substanz auf die Warenbahn aufgebracht wird. Diese Variante des erfindungsgemäßen Verfahrens wird immer dann angewendet, wenn eine oligomerisierbare und/oder polymerisierbare Substanz mit den durch den Zerfall des Initiators entstehenden reaktiven Zentren reagieren soll.

Bezüglich der Ausrichtung der Funken- und/oder kurzzeitigen Bogenentladungen relativ zur Transportrichtung der Warenbahn ist festzuhalten, daß bei dem erfindungsgemäßen Verfahren grundsätzlich zwei Möglichkeiten gegeben sind. So sieht die erste Möglichkeit vor, daß hier die Funken- und/oder Bogenentladung in Transportrichtung bzw. entgegengesetzt zur Transportrichtung der Warenbahn ausgerichtet ist, während bei der zweiten Möglichkeit die Funken- und/oder kurzzeitige Bogenentladung unter einem Winkel zwischen 75 ° und 105°, insbesondere unter einem Winkel von etwa 90° und somit quer, relativ zur Transportrichtung der Warenbahn erfolgt. Ist hingegen eine besondere hohe Energiebeaufschlagung der Warenbahn durch die Funken- und/oder Bogenentladung erwünscht, so bietet es sich insbesondere an, die zuvor genannten beiden Möglichkeiten gleichzeitig anzuwenden, d.h. die Funken- und/oder kurzzeitige Bogenentladung sowohl unter den zuvor genannten Winkeln quer zur Transportrichtung der Warenbahn als auch in Transportrichtung und/oder entgegengesetzt hierzu auszurichten, wie dies nachfolgend noch konkret beschrieben ist.

Um bei dem erfindungsgemäßen Verfahren die hierfür erforderliche Funken- und/oder kurzzeitige Bogenentladung reproduzierbar zu erzeugen, bietet es sich an, eine Gleichspannung oder insbesondere eine Wechselspannung oder eine hochfrequente Spannung anzulegen. Eine derartige Spannungsversorgung ist immer dann empfehlenswert, wenn bei dem erfindungsgemäßen Verfahren eine Vielzahl von Funken- und/oder Bogenentladungen erzeugt wird, wobei dann vorzugsweise eine einzige Spannungsquelle verwendet wird.

Um besonders energiereiche Funkenentladungen und/oder kurzzeitige Bogenentladungen bei dem erfindungsgemäßen Verfahren sicherzustellen, sieht eine Weiterbildung des erfindungsgemäßen Verfahrens vor, daß man hier eine Spannungsquelle mit einer Spannung kleiner als 50 kV, insbesondere mit einer Spannung zwischen 2 kV und 25 kV, verwendet.

Bezüglich der Zeit, die erforderlich ist, um die zuvor beschriebenen Veränderungen der behandelten Warenbahn zu erzielen, ist allgemein festzuhalten, daß sich diese Behandlungszeiten nach der jeweils erwünschten Eigenschaftsveränderung, dem eingesetzten Material der Warenbahn und der erforderlichen Energie der Funken- und/oder Bogenentladung richtet. Üblicherweise beträgt bei dem erfindungsgemäßen Verfahren die Behandlungszeit kleiner als 2 Sekunden und variiert vorzugsweise zwischen 0,01 Sekunden und 1,5 Sekunden.

Bezüglich der Transportgeschwindigkeit, mit der bei dem erfindungsgemäßen Verfahren die Warenbahn relativ zur Behandlungseinrichtung transportiert wird, ist festzuhalten, daß diese Transportgeschwindigkeit in der Regel zwischen 10 m/min und 150 m/min, vorzugsweise zwischen 25 m/min und 50 m/min, schwankt.

Unter den Begriff Warenbahn im Sinne der vorliegenden Anmeldung fallen alle flächenartigen Gebilde mit einer in bezug auf die Länge begrenzten Breite aus Kunststoff, insbesondere Polyamid-Folien, Polyester-Folien, Polyalkylen-Folien oder Polytetrafluorethylen-Folien, textile Warenbahnen, wie insbesondere Webwaren, Wirkwaren, Vliese, sowie natürliche oder künstliche Gummi-Warenbahnen.

Besonders geeignet ist es, wenn man bei dem erfindungsgemäßen Verfahren eine Warenbahn auswählt, die ein textiles Flächengebilde ist, insbesondere eine Web- oder Wirkware. Hier lassen sich nach dem erfindungsgemäßen Verfahren insbesondere wollhaltige textile Warenbahnen derart behandeln, daß die Schuppenstruktur der Wolle abgetragen wird, so daß eine derartige wollhaltige textile Warenbahn eine dauerhafte filzfreie Ausrüstung besitzt und zudem noch intensiver färbbar oder bedruckbar ist, wie dies bereits eingangs beschrieben ist.

Insbesondere konnte festgestellt werden, daß sich das zuvor beschriebene erfindungsgemäße Verfahren bei textilen Warenbahnen und vorzugsweise bei woll- und/oder baumwollhaltigen textilen Warenbahnen dann besonders eignet, wenn das erfindungsgemäße Verfahren zur Vorbehandlung dieser Warenbahnen eingesetzt wird. Hierbei können durch Anwendung des erfindungsgemäßen Verfahrens beispielsweise die auf Rohwaren vorhandenen natürlichen und/oder die im Rahmen der Herstellung aufgebrachten Produkte, wie beispielsweise Schmälzen, Avivagen, Paraffine, Öle, Schlichten oder sonstige Verschmutzungen (so z.B. Wollfett, Wollschweiß, Lignin, Schalen, Kletten) entfernt oder zumindestens so weit verändert werden, daß ihre anschließende Entfernung im wäßrigen Medium im Rahmen der Rohwarenwäsche erheblich vereinfacht wird. Dies wiederum führt dazu, daß das erfindungsgemäße Verfahren die mit hohen Abwassermengen verbundene Rohwarenwäsche dahingehend optimiert, daß entsprechend geringere Abwassermengen anfallen, wenn zuvor die jeweils zu waschende Warenbahn nach dem erfindungsgemäßen Verfahren behandelt worden ist.

So wurde beispielsweise beobachtet, daß von Wollflächengebilden die zuvor genannten Bestandteile (Schmälzen, Avivagen, Paraffine, Öle, Verschmutzungen) durch die Funken- und/oder kurzzeitige Bogenentladung in hydrophile Substanzen, vorzugsweise durch die dabei auftretende Oxidation, umgewandelt werden, so daß sie aufgrund ihrer erhöhten Hydrophilie sehr leicht mit einem sich anschließenden wäßrigen System entfernt werden. Auch in der Wolle vorhandene pflanzliche Verunreinigungen, so z.B. Lignin, lassen sich nach Anwendung des erfindungsgemäßen Verfahren wesentlich leichter und schneller entfernen, so daß teilweise die mit einer hohen Umweltverunreinigung verbundene Karbonisierung entfallen kann oder daß hier wesentlich geringere Mengen Schwefelsäure bzw. Peroximonoschwefelsäure erforderlich werden. Dies wird ebenfalls auf eine Erhöhung der Hydrophilie und/oder auf eine Oxidation der Verunreinigung bei der Funken- und/oder kurzzeitigen Bogenentladung zurückgeführt.

Wie bereits vorstehend erwähnt ist, kann das erfindungsgemäße Verfahren bei baumwollhaltigen Flächengebilden zu ähnlichen Effektenführen, wie diese vorstehend für wollhaltige Flächengebilde beschrieben sind. Hier konnte zusätzlich festgestellt werden, daß durch eine bei dem erfindungsgemäßen Verfahren vorgesehene Funken- und/oder kurzzeitige Bogenentladung die in der Baumwolle enthaltenen Schalen und Kletten derart verändert werden, daß sie bei einem anschließenden Bleichprozeß, insbesondere bei einer oxidativen Bleiche, sehr schnell und mit einem verringerten Einsatz an Bleichchemikalien entfernt werden können.

Bei synthesefaserhaltigen textilen Warenbahnen, bei denen das erfindungsgemäße Verfahren ebenfalls mit großem Erfolg angewendet werden kann, ist es möglich, die die Warenbahn bildenden Fadensysteme durch die erfindungsgemäße Behandlung punktuell, linienförmig und/oder flächig miteinander zu verkleben, um so die Schiebefestigkeit einer derart behandelten Warenbahn zu verbessern, ohne daß es hierzu erforderlich ist, Ausrüstungsprodukte, die den Griff negativ beeinflussen, auf die Warenbahn zu applizieren. Hierbei fallen unter den Begriff synthesefaserhaltige Warenbahnen solche textilen Flächengebilde, die Polyester- (Polyethylenterephthalat), Polyacrylnitril-, Polyamid6.- und/oder Polyamid6.6-Fasern enthalten.

Auch können textile Warenbahnen mit einfachen Mitteln durch Anwendung des erfindungsgemäßen Verfahrens mit den herkömmlichen Ausrüstungen dauerhaft ausgerüstet werden, da hierbei eine chemische Anbindung der Ausrüstung (Weichmachungsmittel, Oleophobiermittel, Hydrophobiermittel, schrumpffreie Ausrüstung) an die Warenbahn erfolgt.

Die vorliegende Erfindung betrifft desweiteren eine Vorrichtung zur Durchführung der zuvor beschriebenen Varianten des erfindungsgemäßen Verfahrens.

Die erfindungsgemäße Vorrichtung zur Durchführung des Verfahrens weist eine Behandlungseinrichtung auf, die ein Transportsystem für die Warenbahn sowie mindestens eine mit Abstand von einer Vielzahl von Gegenelektroden angeordnete Elektrode zur Erzeugung der Funken- und/oder kurzzeitigen Bogenentladung umfaßt, wobei die mindestens eine Elektrode und die Vielzahl der Gegenelektroden mit einer gemeinsamen Spannungsquelle verbunden sind.

Jeder Gegenelektrode ist mindestens ein erster und ein zweiter Kondensator zugeordnet, wobei der zweite Kondensator jeweils die Gegenelektrode mit der Elektrode verbindet.

Hierbei bewirken die den Gegenelektroden zugeordneten ersten Kondensatoren, daß die Vielzahl der Gegenelektroden elektrisch entkoppelt sind, so daß an jeder Gegenelektrode eine bezüglich der Energie gleichbleibende Funken- und/oder kurzzeitige Bogenentladung erzeugt wird.

Durch Variation der Kapazität der ersten Kondensatoren ist es ferner möglich, die Leistung der Funken- und/oder kurzzeitigen Bogenentladung zu begrenzen und auf einen vorgegebenen Wert zu halten. Desweiteren verhindert die Anordnung der ersten Kondensatoren, daß sich nur an bestimmten Positionen der sich über die Warenbahnbreite erstreckenden. Gegenelektroden Funken- und/oder kurzzeitigen Bogenentladungen ausbilden, so daß sich die Entladungen gleichmäßig über die gesamte Warenbahnbreite erstrecken. Darüber hinaus können mit einer derartigen Anordnung eine unbegrenzte Zahl von Gegenelektroden und Elektroden über eine einzige Spannungsquelle betrieben werden.

Die erfindungsgemäße Vorrichtung weist eine Reihe von Vorteilen auf. Bedingt dadurch, daß die erfindungsgemäße Vorrichtung im einfachsten Fall neben dem Transportsystem für die Warenbahn nur zwei Elektrode (Gegenelektrode und Elektrode, zwei Kondensatoren, sowie eine Spannungsquelle umfaßt, besitzt die erfindungsgemäße Vorrichtung eine besonders kleine Bauweise. Dies trifft auch für solche Ausführungsformen zu, bei denen eine Reihe von Elektroden und Gegenelektroden über die Warenbahnbreite verteilt oder bei der mehrere Reihen von Elektroden und Gegenelektroden über die Warenbahnbreite verteilt angeordnet sind. Diese kleine Bauweise hat wiederum den Vorteil, daß die erfindungsgemäße Vorrichtung besonders einfach installierbar und im Prinzip im Verarbeitungsgang der Warenbahn an jeder Stelle einsetzbar ist, zumal die erfindungsgemäße Vorrichtung wegen der wenigen Bauteile auch besonders preisgünstig herstellbar ist.

Bezüglich der Ausbildung des Transportsystems für die Warenbahn ist festzuhalten, daß hier verschiedene Möglichkeiten bestehen. So wird im einfachsten Fall das Transportsystem durch zwei, mit Abstand voneinander angeordnete Umlenkwalzen gebildet, wobei wahlweise diese beiden Umlenkwalzen angetrieben oder nicht angetrieben sind. Ebenso ist es möglich, hier nur eine der beiden Umlenkwalzen anzutreiben, wobei es sich bei dieser Ausführungsform dann empfiehlt, in Transportrichtung der Warenbahn gesehen die zweite Umlenkwalze anzutreiben, die, für den Fall, daß die Warenbahn nicht auf die zweite Umlenkwalze aufgewickelt wird, von der Warenbahn umschlungen wird. Zwischen diesen mit Abstand voneinander angeordneten Umlenkwalzen sind dann die mindestens eine Elektrode und die Vielzahl der Gegenelektroden positioniert, wobei die Elektroden (Elektrode und Gegenelektroden) auf einer Warenbahnseite, d.h. auf der Warenbahnoberseite oder der Warenbahnunterseite, oder die eine Elektrode auf der Warenbahnoberseite und die Gegenelektroden auf der Warenbahnunterseite oder umgekehrt angeordnet sein können. Im ersteren Fall wird dann die Funken- und/oder kurzzeitigen Bogenentladung in Transportrichtung der Warenbahn oder entgegengesetzt hierzu und im zweiten Fall die Funken- und/oder kurzzeitigen Bogenentladung quer zur Transportrichtung der Warenbahn ausgebildet.

Eine andere Möglichkeit zur Ausbildung des Transportsystems für die Warenbahn sieht vor, daß hier das Transportsystem als Aufwickeleinrichtung für die Warenbahn ausgebildet ist. Dabei wird dann die Warenbahn, während sie auf die Aufwickeleinrichtung aufgewickelt wird, mit der Funken- und/oder kurzzeitigen Bogenentladung beaufschlagt, wie dies nachfolgend noch im Detail beschrieben ist.

Bei einer besonders geeigneten Weiterbildung der zuvor beschriebenen Ausführungsform ist eine Aufwickeleinrichtung vorgesehen, die eine angetriebene Aufwickelwalze zur Aufnahme der Warenbahn umfaßt. Bevorzugt wird hierbei die Aufwickelwalze als Elektrode geschaltet, während die Vielzahl von Gegenelektroden mit Abstand von der Aufwickelwalze angeordnet ist und sich über die gesamte axiale Ausdehnung der Aufwickelwalze erstreckt. Hierbei kann insbesondere die Vielzahl der Gegenelektroden als leitender Stab oder Plattenelement ausgebildet sein, deren bzw. dessen axiale Länge an die axiale Länge der Aufwickelwalze angepaßt ist. Hierdurch wird dann sichergestellt, daß die gesamte Warenbahnbreite mit einer gleichmäßigen Funken- und/oder kurzzeitigen Bogenentladung beaufschlagt wird. Sollte bei dieser Ausführungsform nur eine Behandlung von Teilbereichen der Warenbahn erwünscht sein, ist es lediglich erforderlich, die stabförmigen oder plattenähnlichen Gegenelektroden zu kürzen oder mit einem isolierenden Überzug zu versehen, wie dies bereits vorstehend beschrieben ist. Die zuvor beschriebene Ausführungsvariante der erfindungsgemäßen Vorrichtung setzt jedoch voraus, daß die Warenbahn selbst elektrisch leitfähig ist, da ansonsten mit zunehmender Wickeldichte die Ausbildung der Funken- und/oder kurzzeitigen Bogenentladung behindert wird.

Eine besonders geeignete Ausführungsform der erfindungsgemäßen Vorrichtung sieht vor, daß jeder erste Kondensator als Koaxialkabel ausgebildet ist. Diese Ausführungsform weist den Vorteil auf, daß durch Variation der Länge des Koaxialkabels besonders einfach die Kapazität der als Koaxialkabel ausgebildeten ersten Kondensatoren variierbar ist, so daß hierbei in beliebiger Weise und innerhalb von kürzester Zeit die Leistung der Funken- und/oder kurzzeitigen Bogenentladung verändert und auf die jeweiligen Verhältnisse angepaßt werden kann.

Bezüglich der Kapazität des ersten Kondensators, der zwischen jeder Gegenelektrode und der Spannungsquelle geschaltet ist, ist festzuhalten, daß diese zwischen 5 pF und 5.000 pF, vorzugsweise zwischen 100 pF und 1.500 pF, variiert.

Bei der erfindungsgemäßen Vorrichtung, bei denen mehrere Elektroden und eine entsprechende Anzahl von Gegenelektroden mit einer einzigen Spannungsquelle verbunden sind, ist festzuhalten, daß die jeweiligen Elektroden und die jeweiligen Gegenelektroden vorzugsweise parallel geschaltet ist.

Bezüglich der Materialien, aus denen die Elektroden und die Gegenelektroden gefertigt sind, ist allgemein festzuhalten, daß hierfür elektrisch leitende Materialien, insbesondere solche Materialien, die ihre Eigenschaften unter den jeweiligen Bedingungen der Funken- und/oder kurzzeitigen Bogenentladung nicht verändern, ausgewählt werden. So kann beispielsweise die Elektrode bzw. können die Gegenelektroden aus Metall oder Metallegierungen, insbesondere aus Aluminium, Kupfer, Eisen, Edelstahl, Platin, Platinlegierung, Wolfram oder Nickel, angefertigt werden, wobei aus Kostengründen Aluminium, Eisen, Stahl oder Kupfer bevorzugt werden. Ebenso ist es möglich, eine elektrisch leitende Flüssigkeit oder eine elektrisch leitende Schmelze als Elektrode oder Gegenelektrode auszuwählen.

Die Kapazität des bei der erfindungsgemäßen Vorrichtung verwendeten zweiten Kondensators richtet sich dabei nach der erwünschten Modulation, wobei vorzugsweise solche Kondensatoren als zweite Kondensatoren eingesetzt werden, deren Kapazität gleich oder kleiner ist als die Kapazität des ersten Kondensators. Insbesondere werden solche zweiten Kondensatoren verwendet, deren Kapazität 10 % bis 90 % der Kapazität des ersten Kondensators beträgt.

Die zuvor beschriebene Variation der Kapazität des zweiten Kondensators und damit die zeitliche Modulation der Funken- und/oder kurzzeitigen Bogenentladung kann insbesondere dadurch in besonders einfacher Weise erreicht werden, daß hierbei der zweite Kondensator ebenfalls als Koaxialkabel ausgebildet wird, wobei durch eine Veränderung der Länge des Koaxialkabels die gewünschte Kapazität eines derartigen zweiten Kondensators eingestellt werden kann.

Wie bereits eingangs beschrieben ist, weist die erfindungsgemäße Vorrichtung vorzugsweise eine Behandlungseinrichtung auf, die eine Vielzahl von mit Abstand voneinander angeordneten Gegenelektroden, insbesondere zwei bis achtzig Gegenelektroden, umfaßt, die sich quer zur Transportrichtung der Warenbahn erstrecken. Hierbei sind diese Gegenelektroden parallel geschaltet und mit einer einzigen gemeinsamen Spannungsquelle verbunden, wobei eine der Zahl der Gegenelektroden entsprechenden Anzahl von Elektroden ebenfalls an die gemeinsame Spannungsquelle angeschlossen ist. Mit einer derartigen Behandlungseinrichtung ist es in besonders einfacher Weise möglich, die Intensität der Behandlung, d.h. die Zahl der auf die Oberfläche der Warenbahn einwirkenden Funken- und/oder kurzzeitigen Bogenentladungen, durch Variation der Anzahl und durch Variation der Positionierung der Gegenelektroden und der hierzu gehörigen Elektroden zu verändern.

Bezüglich der Spannungsquelle, mit der bei der erfindungsgemäßen Vorrichtung die mindestens eine Elektrode und die Vielzahl der Gegenelektroden jeweils verbunden ist, ist festzuhalten, daß vorzugsweise eine als Wechselspannung ausgebildete Spannungsquelle eingesetzt wird. Üblicherweise erzeugt dann diese Spannungsquelle eine Wechselspannung mit einer Frequenz zwischen 5 Hz und 20.000 Hz, vorzugsweise 50 Hz.

Bezüglich der durch die bei der erfindungsgemäßen Vorrichtung vorgesehenen Spannungsquelle erzeugten Spannung ist festzuhalten, daß sich die Größe dieser Spannung nach der Ausgestaltung und Anordnung der Vielzahl der Gegenelektroden und der hierzu gehörigen Elektrode richtet. Üblicherweise weist die erfindungsgemäße Vorrichtung eine Spannungsquelle auf, die eine Wechselspannung kleiner als 50 kV, insbesondere eine Wechselspannung zwischen 500 V und 50 kV und vorzugsweise eine Wechselspannung zwischen 2 kV und 25 kV, erzeugt.

Vorteilhafte Weiterbildungen des erfindungsgemäßen Verfahrens sowie der erfindungsgemäßen Vorrichtung sind in den Unteransprüchen angegeben.

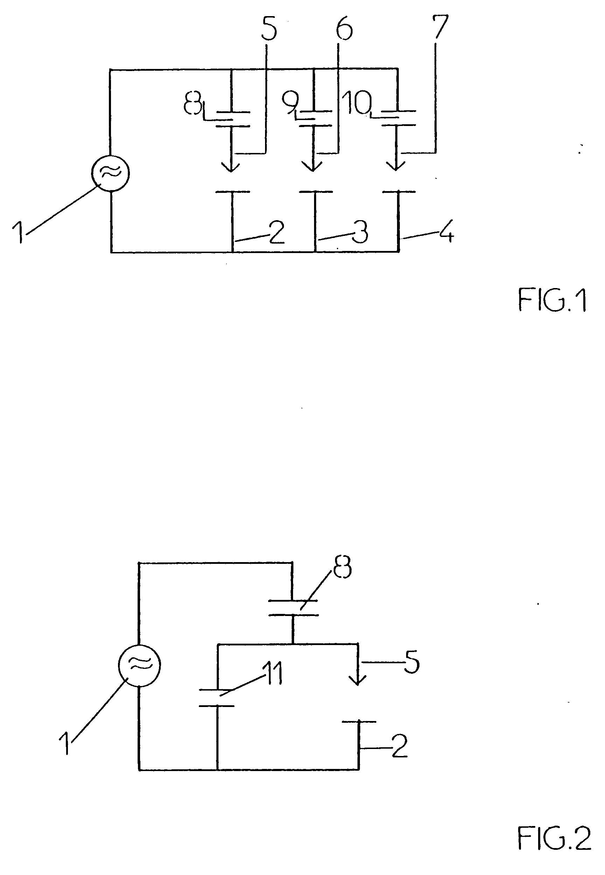

Die erfindungsgemäße Vorrichtung wird nachfolgend anhand von einem, in Figur 2 abgebildeten Ausführungsbeispiel in Verbindung mit der Zeichnung näher erläutert.

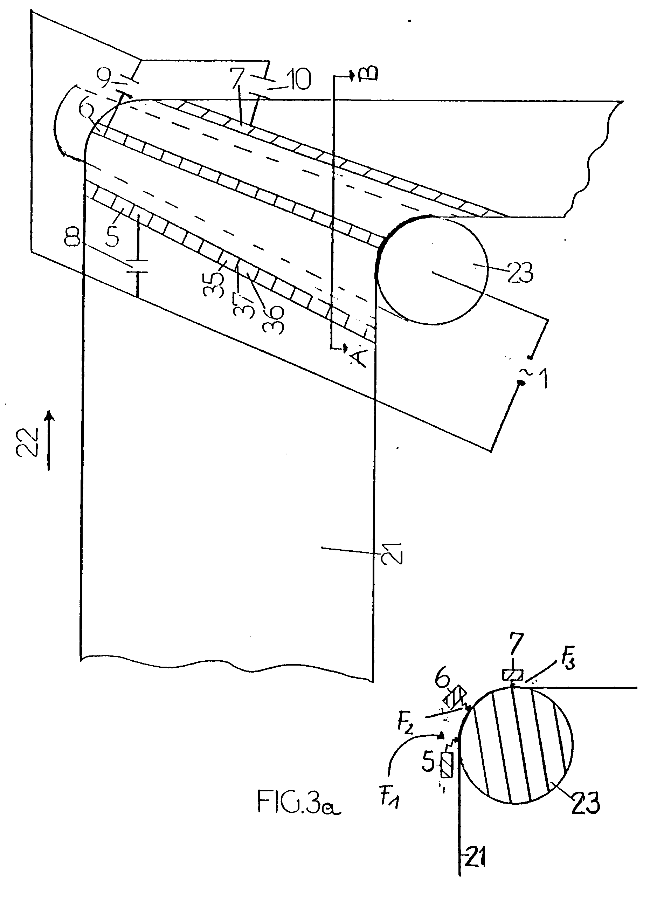

Bei der nachfolgend beschriebenen Zeichnung ist zu beachten, daß ausschließlich die Figur 2 der Zeichnung eine Schaltskizze wiedergibt, wie sie vorstehend für das erfindungsgemäße Verfahren und die erfindungsgemäße Vorrichtung beschrieben ist. Die Figur 1 bildet eine Schaltskizze gemäß dem Oberbegriff der Patentansprüche 1 und 21 ab, während die Figuren 3 bis 7 lediglich zur Darstellung der Anordnung der Elektrode und Gegenelektroden sowie des Transportes der Warenbahn dienen.

In der Zeichnung zeigen:
- Figur 1: ein allgemeines Schaltbildgemäß dem Oberbegriff der Patentansprüche 1 und 21;
- Figur 2: eine Ausführungsform des beider erfindungsgemäßen Vorrichtung augewendeten Schaltbildes;
- Figur 3: eine schematische Draufsicht auf eine erste Ausführungsform zur Darstellung der Elektrodenanordung;
- Figur 3a: eine schematische Detailschnittansicht der ersten Ausführungsform längs der Linie A-B in Figur 3;
- Figur 4: eine schematische Ansicht einer zweiten Ausführungsform zur Darstellung der Elektrodenanordung;
- Figur 5: eine schematische Seitenansicht einer dritten Ausführungsform zur Darstellung der Elektrodenanordung;
- Figur 6: eine schematische Seitenansicht einer vierten Ausführungsform zur Darstellung der Elektrodenanordung; und
- Figur 7: eine schematische Schnittansicht einer fünften Ausführungsform zur Darstellung der Elektrodenanordung

In den Figuren 1 bis 7 sind die selben Teile mit den selben Bezugsziffern versehen.

Die Figur 1 bildet schematisch eine Schaltskizze ab, die bei den in den Figuren 3 bis 7 gezeigten Ausführungsformen der Vorrichtung zur Anwendung gelangen. Hierbei weist die Schaltung eine Spannungsquelle 1 auf, wobei die Spannungsquelle 1 z.B. eine Wechselspannung von 5 kV mit einer Frequenz von 50 Hz erzeugt. Mit dieser Spannungsquelle 1 sind drei beispielhaft gezeigte Elektroden 2, 3 und 4 sowie drei beispielhaft gezeigte Gegenelektroden 5, 6 und 7 verbunden, wobei sowohl die Elektroden 2 bis 4 als auch die Gegenelektroden 5 bis 7 parallel geschaltet sind. Jeder Gegenelektrode 5 bis 7 ist ein erster Kondensator 8, 9 bzw. 10 zugeordnet, wobei die ersten Kondensatoren 8 bis 10 eine Kapazität von 500 pF besitzen. Mit anderen Worten sind somit die Gegenelektroden 5 bis 7 entkoppelt, was dazu führt, daß bei einer Spannungsbeaufschlagung zwischen den Elektroden 5 und 2, den Elektroden 6 und 3 sowie den Elektroden 7 und 4 bei Überschreitung einer gewissen Grenzspannung, die durch den Elektrodenabstand sowie durch die Kapazität der ersten Kondensatoren 8 bis 10 bestimmt wird, eine elektrische Funken- und/oder kurzzeitige Bogenentladung ausgebildet wird. Während dieser Funken- und/oder Bogenentladung fließt Wechselstrom durch die jeweiligen ersten Kondensatoren 8 - 10.

Das in Figur 2 gezeigte Schaltbild unterscheidet sich von dem zuvor beschriebenen Schaltbild dadurch, daß hierbei die Schaltung einen zweiten Kondensator 11 aufweist. Auch hier umfaßt die Schaltung eine Spannungsquelle 1, einen ersten Kondensator 8, eine Gegenelektrode 5, eine Elektrode 2, wobei in der Figur 2 nur beispielhaft ein einziges Elektrodenpaar 5 und 2 abgebildet ist. Parallel zu den Elektroden 5 und 2 ist ein zweiter Kondensator 11 geschaltet, der eine zeitliche Modulation der zwischen den Elektroden 5 und 2 stattfindenden Funken- bzw. kurzzeitigen Bogenentladung bewirkt. Der zweite Kondensator 11 besitzt eine Kapazität von 400 pF. Die Spannungsquelle 1 erzeugt eine solche Spannung, wie dies vorstehend für das Schaltbild 1 angegeben wurde.

In der Figur 3 ist eine erste Möglichkeit zur Anordung der Elektroden dargestellt, wobei die dort schematisch gezeigte Vorrichtung ein Transportsystem für eine leitfähige Warenbahn 21 aufweist. Hierbei besteht das Transportsystem aus einer Umlenkwalze 23, die von der Warenbahn 21 mit einem Umschlingungswinkel von etwa 90° umschlungen wird, so daß bei einer Drehung der Walze 23 die Warenbahn 21 in Pfeilrichtung 22 transportiert wird. Oberhalb der Umlenkwalze 23 sind drei Reihen von Gegenelektroden 5, 6, und 7 angeordnet. Die Reihen der Gegenelektroden 5, 6 und 7 sind mit Abstand von der Umlenkwalze 23 positioniert, wie dies am besten in der Figur 3 a zu erkennen ist.

Jede Reihe von Gegenelektroden besteht aus 10 einzelnen Gegenelektroden, wobei die Gegenelektroden 35 und 36 beispielhaft eingezeichnet sind. Jede Gegenelektrode 35 bzw. 36 ist gegenüber einer jeden benachbarten Gegenelektrode durch einen Isolator 37 elektrisch isoliert. Alle Gegenelektroden sind parallel geschaltet, wobei zwischen der Spannungsquelle 1 und den einzelnen Gegenelektroden jeweils ein erster Kondensator 8 bis 10 geschaltet ist, wie dies für die Gegenelektroden 5, 6 und 7 beispielhaft gezeigt ist. Hierdurch sind alle Gegenelektroden elektrisch entkoppelt. Die drei Reihen der Gegenelektroden erstrecken sich über die gesamte Warenbahnbreite der Warenbahn 21. In Laufrichtung 22 der Warenbahn 21 gesehen sind die Isolierschichten 37 von benachbarten Reihen von Gegenelektroden über die Warenbahnbreite 27 gesehen versetzt angeordnet.

Die aus einem elektrisch leitfähigen Material (Stahl) bestehende Umlenkwalze 23 ist mit der Spannungsquelle 1 verbunden.

Sobald die hochfrequente Spannung bei 1 anliegt, bildet sich zwischen den einzelnen Gegenelektroden einer jeden Reihe der Gegenelektroden 5, 6 und 7 eine Funken- und/oder kurzzeitige Bogenentladung F₁ bis F₃ aus, wie dies schematisch in der Figur 3 a angedeutet ist. Dies wiederum führt dazu, daß die in Pfeilrichtung 22 mit einer vorgegebenen Geschwindigkeit transportierte Warenbahn 21 vollflächig über ihre gesamte Warenbahnbreite und ihre Warenbahnlänge dieser Funken- und/oder kurzzeitigen Bogenentladung unterworfen wird, wodurch die eingangs beschriebenen Veränderungen erzielt werden.

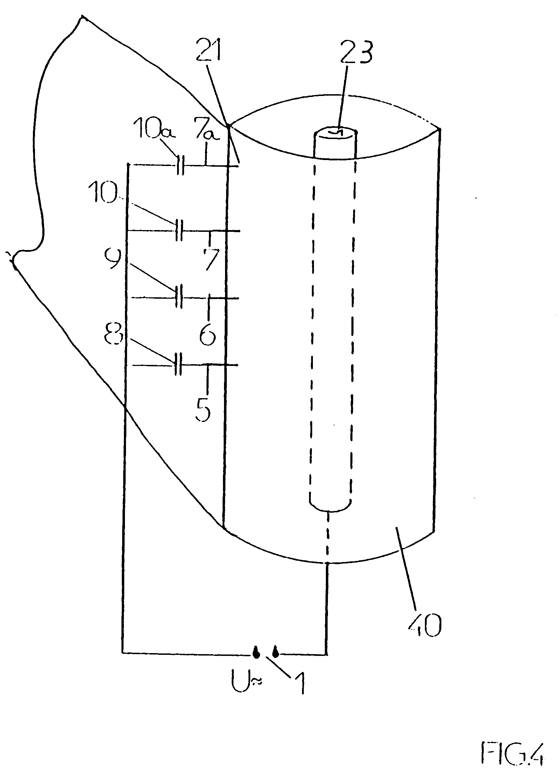

Die in der Figur 4 gezeigte zweite Möglichkeit zur Anordung der Elektroden unterscheidet sich von der zuvor beschriebenen Möglichkeit dahingehend, daß hierbei die Warenbahn 21 auf eine Aufwickelwalze 23 in Form eines Warenbahnwickels 40 aufgewickelt wird. Die Aufwickelwalze 23 besteht aus einem elektrisch leitenden Material (Edelstahl) und ist mit der Spannungsquelle 1 verbunden, so daß die Aufwickelwalze 23 selbst als Elektrode ausgebildet ist. Oberhalb der Aufwickelwalze 23 und mit Abstand von der Aufwickelwalze 23 ist eine Reihe von beispielsweise vier eingezeichneten Gegenelektroden 5, 6, 7 und 7a angeordnet, wobei diese Gegenelektroden über entsprechende erste Kondensatoren 8, 9, 10 und 10a mit der Spannungsquelle 1 verbunden sind. Zur Erhöhung der Gleichmäßigkeit der Behandlung sind weitere Reihen von nicht gezeigten Gegenelektroden angeordnet, die relativ zur Position der Gegenelektroden 5 bis 7, 7a über die Warenbahnbreite gesehen, versetzt positioniert sind. Bedingt dadurch, daß die Warenbahn zuvor über eine entsprechende Imprägniereinheit, beispielsweise über einen nicht gezeigten Foulard, geführt ist und dort mit einer elektrisch leitfähigen Flüssigkeit getränkt wurde, bildet sich zwischen den Gegenelektroden 5 bis 7 und 7a und der als Elektrode geschalteten Walze 23 über die elektrisch leitende und aufgewickelte Warenbahn 21 eine Funken- und/oder kurzzeitige Bogenentladung aus, was zur Folge hat, daß die Warenbahn 21 entsprechend behandelt wird, wie dies eingangs allgemein beschrieben ist.

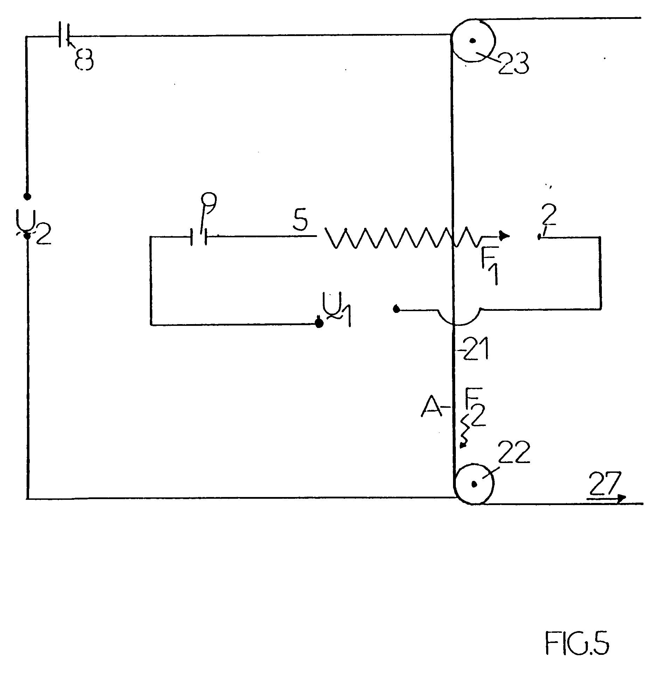

Die in der Figur 5 schematisch gezeigte weitere Möglichkeit zur Anordnung der Elektroden sicht ein Transportsystem für die Warenbahn 21 vor, das aus einer als Walze ausgebildeten Abzugseinrichtung 22 und einer als Walze ausgebildeten Liefereinrichtung 23 besteht. Hierbei erfolgt der Transport der Warenbahn in Pfeilrichtung 27.

Die Lieferwalze 23 besteht aus einem elektrisch leitenden Material und ist als Gegenelektrode geschaltet und über einen Kondensator 8 mit einer Wechselspannungsquelle U₂ verbunden. Die Abzugswalze 22 besteht aus einem elektrisch leitfähigen Material (Edelstahl) und ist als Elektrode ausgebildet und direkt an die Spannungsquelle U₂ angeschlossen.

Unter einem Winkel von 90° relativ zur Transportrichtung der Warenbahn ist eine Reihe von Gegenelektroden vorgesehen, wobei beispielsweise hier nur die Gegenelektroden 5 und 6 abgebildet sind. Mit Abstand von den Gegenelektroden 5 und 6 sind eine Reihe von sich über die Warenbahnbreite erstreckende Elektroden vorgesehen, wobei hier beispielhaft in der Figur 5 nur die Elektroden 2 und 3 eingezeichnet sind. Die Gegenelektroden und die Elektroden sind jeweils auf einer Warenbahnseite angeordnet und mit Abstand voneinander positioniert. Die Reihe der Gegenelektroden sind parallel geschaltet und über eine entsprechende Anzahl von ersten Kondensatoren mit einer Spannungsquelle U₁ verbunden, wie dies für die Gegenelektroden 5 und 6 sowie die ersten Kondensatoren 9 und 10 beispielhaft gezeigt ist. Die Reihe der Elektroden sind direkt mit der Wechselspannungsquelle U₁ verbunden, wie dies beispielhaft für die beiden Elektroden 2 und 3 gezeigt ist.

Wird nunmehr die Warenbahn 21 in Transportrichtung (Pfeilrichtung 27) gesehen vor der Lieferwalze 23 mit einer wäßrigen Lösung, Dispersion oder Suspension einer leitfähigen Substanz, beispielsweise über einen nicht gezeigten, herkömmlich ausgebildeten Foulard, imprägniert und gelangt dann in den Bereich zwischen den beiden Walzen 23 und 22, so erfolgt zunächst aufgrund der Leitfähigkeit der nassen Warenbahn eine Erwärmung derselben, die zu einem Trocknen der Warenbahn führt. Sobald die Warenbahn getrocknet ist, wobei dieser Punkt in der Figur 5 beispielhaft mit A bezeichnet ist, bildet sich hier eine Vielzahl von elektrischen Funken- und/oder kurzzeitigen Bogenentladungen in Transportrichtung 27 der Warenbahn 21 aus, wie dies durch F₂ in der Figur 5 angedeutet ist. Diese elektrischen Entladungen erstrecken sich über die gesamte Warenbahnbreite. Hierbei ist der Abstand zwischen der Walze 23 und der Walze 22 derart ausgewählt, daß ein direkter Funkendurchschlag zwischen den Walzen 22 und 23 verhindert wird. Desweiteren bilden sich eine Vielzahl von zweiten Funken- und/oder kurzzeitigen Bogenentladungen zwischen der Reihe von Gegenelektroden und der Reihe von Elektroden aus, wobei diese zweiten Entladungen quer zur Transportrichtung der Warenbahn erfolgen und beispielhaft durch F₁ in der Zeichnung zwischen den Elektrodenpaaren 5 und 2 sowie 6 und 3 angedeutet sind. Sowohl die Entladungen F₁ als auch die Entladungen F₂ führen zu den zuvor beschriebenen Eigenschaftsveränderungen der Warenbahn, wobei diese Eigenschaftsveränderungen besonders gleichmäßig sind, da sich die Entladungen F₁ und F₂ gleichmäßig über die Warenbahnbreite erstrecken. Desweiteren bewirken die Entladungen F₂, daß die Warenbahn abhängig von der Transportgeschwindigkeit mindestens so weit getrocknet wird, daß sie problemlos aufgewickelt werden kann.

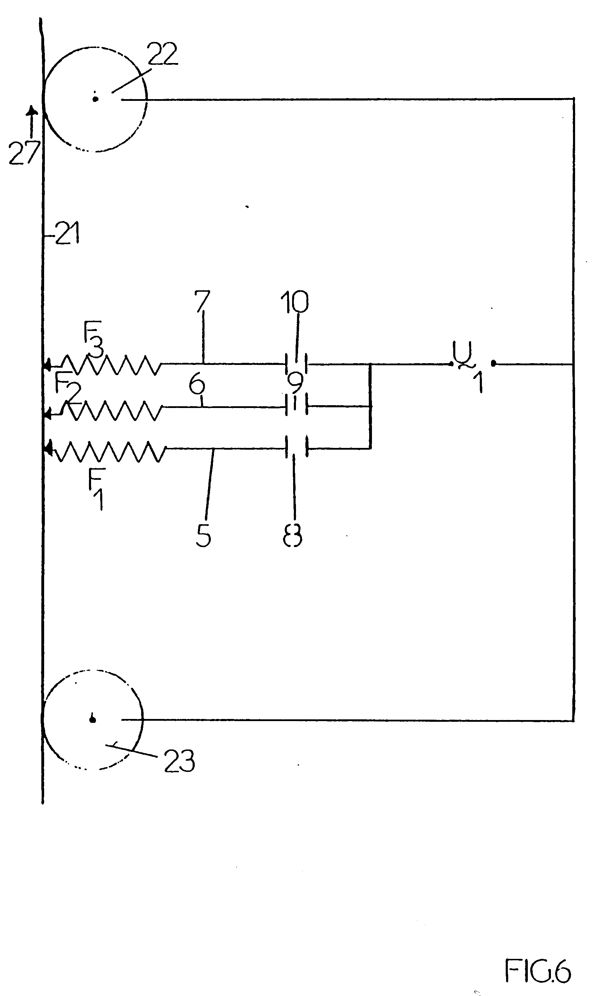

Die in der Figur 6 gezeigte vierte Möglichkeit zur Elektrodenanordnung sieht wie die zuvor beschriebene Möglichkeiten eine Abzugswalze 22 und eine Lieferwalze 23 vor, wobei die Abzugswalze 22 und die Lieferwalze 23 aus einem elektrisch leitenden Material (Stahl) ausgebildet sind. Bedingt dadurch, daß die Warenbahn 21 die Walzen 22 und 23 umschlingen, wird die Warenbahn 21 in Pfeilrichtung 27 bei einer Drehung der Walzen mit einer vorgegebenen kontinuierlichen Geschwindigkeit transportiert. Die Walzen 22 und 23 sind parallel geschaltet und mit einer Spannungsquelle 1 verbunden, wobei die Spannungsquelle 1 eine Wechselspannung erzeugt. Eine Reihe von Gegenelektroden erstreckt sich über die Warenbahnbreite quer zur Transportrichtung der Warenbahn. Hierbei umfaßt die Reihe der Gegenelektroden drei beispielhaft gezeigte Gegenelektroden 5 bis 7, die über drei erste Kondensatoren 8 bis 10 ebenfalls mit der Spannungsquelle 1 verbunden sind, wobei die Gegenelektroden 5 bis 7 parallel geschaltet sind. Die übrigen Gegenelektroden der Reihe der Gegenelektroden sind so geschaltet, wie dies für die Gegenelektroden 5 bis 7 gezeigt ist.

Wird nunmehr die Warenbahn 21 mit einer elektrisch leitenden Substanz imprägniert, was dazu führt, daß die Warenbahn 21 ebenfalls leitfähig wird, und gelangt die so imprägnierte und leitfähige Warenbahn in den Bereich zwischen den Walzen 23 und 22, so bilden sich hier entsprechende Funken- und/oder kurzzeitigen Bogenentladungen aus, wie dies beispielhaft durch F₁ bis F₃ in der Zeichnung dargestellt ist. Dies wiederum führt dazu, daß die elektrisch leitfähige Substanz chemisch und/oder physikalisch an der Warenbahn fixiert wird, wie dies bereits eingangs mehrfach beschrieben ist. Bedingt durch die durch die Entladungen erfolgte Fixierung der elektrisch leitfähigen Substanz ändert sich die elektrische Leitfähigkeit der Warenbahn, so daß bei Unterschreiten eines sich einstellenden minimalen Leitfähigkeitswertes der Warenbahn die Ausbildung der Funken- und/oder kurzzeitigen Bogenentladungen automatisch unterbrochen wird. Hierdurch kann der entsprechende Behandlungsprozeß besonders einfach gesteuert werden.

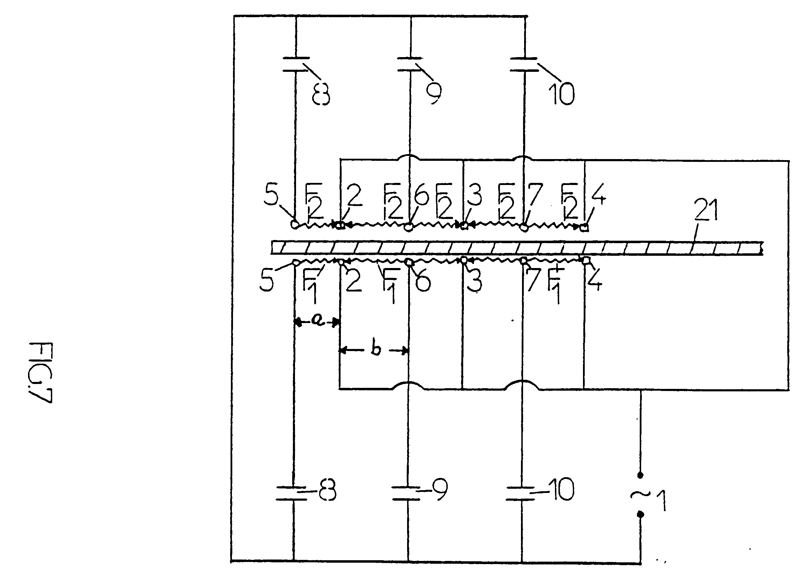

Die in der Figur 7 schematisch abgebildete letzte Möglichkeit der Elektrodenanordnung unterscheidet sich von den zuvor beschriebenen Möglichkeiten dahingehend, daß die in Figur 7 gezeigte Möglichkeit zur Funken- und/oder kurzzeitigen Bogenentladung von solchen Warenbahnen eingesetzt werden kann, die selbst nicht elektrisch leitfähig sind bzw. die nicht durch Auftragen einer leitfähigen Substanz vor der Entladung leitfähig gemacht worden sind. Oberhalb und unterhalb der im Schnitt gezeichneten Warenbahn 21 sind jeweils Reihen von Elektroden 2, 3 und 4 und Gegenelektroden 5, 6 und 7 angeordnet, die derart positioniert sind, daß die Funken- und/oder kurzzeitige Bogenentladung parallel zur Warenbahnoberfläche und Warenbahnunterfläche verlaufen, wie dies durch F₁ und F₂ angedeutet ist. Hierdurch wird erreicht, daß die Umgebungsatmosphäre, so zum Beispiel Luft, aufgrund der Entladungen aktiviert wird, was zur Folge hat, daß entsprechend aktivierte Teilchen zur Warenbahnoberfläche bzw. Warenbahnunterfläche transportiert werden und dort eine chemische und/oder physikalische Modifizierung der Warenbahn, insbesondere der Warenbahnoberfläche bzw. Warenbahnunterfläche, herbeiführen. Der Abstand a zwischen der Gegenelektrode und der Elektrode wird bei der zuvor beschriebenen Ausführungsform kleiner gewählt als der Abstand b, d.h. der Abstand zwischen zwei benachbarten Gegenelektroden, so daß hierdurch eine einwandfreie Ausbildung der Entladung sichergestellt ist. Wahlweise kann die Reihe der Elektroden oder die Reihe der Gegenelektroden derart ausgebildet sein, daß sie mit der Warenbahn in Kontakt treten.

## Patentansprüche

1. Verfahren zur Behandlung einer endlosen Warenbahn, insbesondere aus Kunststoff, Gummi oder Textil, bei dem man die endlose Warenbahn mit einer vorgegebenen Geschwindigkeit durch eine Behandlungseinrichtung transportiert und dabei die endlose Warenbahn vollflächig oder nach einem vorgegebenen Muster einer Funken- und/oder einer kurzzeitigen Bogenentladung unterwirft, wobei man zur Erzeugung der Funken- und/oder kurzzeitigen Bogenentladung mindestens eine Elektrode sowie eine Vielzahl von Gegenelektroden verwendet, die elektrisch derart entkoppelt sind, daß jeder Gegenelektrode ein erster Kondensator oder ein Widerstand zugeordnet wird, dadurch gekennzeichnet, daß man für die Funken- und/oder kurzzeitige Bogenentladung eine solche Brenndauer auswählt, die zwischen 10⁻¹ s und 10⁻⁸ s, vorzugsweise zwischen 10⁻⁶ s und 10⁻² s, variiert und daß man den zeitlichen Verlauf der Funken- und/oder kurzzeitigen Bogenentladung dadurch moduliert, daß man jede Gegenelektrode über einen zweiten Kondensator mit der mindestens einen Elektrode verbindet.

2. Verfahren nach Anspruch 1, dadurch gekennzeichnet, daß man die Behandlung in einer Gasatmosphäre bei einem Druck zwischen 90 x 10³ Pa bis 110 x 10³ Pa, vorzugsweise bei einem Druck von etwa 10⁵ Pa, ausführt.

3. Verfahren nach Anspruch 1 oder 2, dadurch gekennzeichnet, daß man die Behandlung in einer Atmosphäre aus reaktiven Gasen, insbesondere in einer Wasserstoffatmosphäre, Sauerstoffatmosphäre und/oder Silanatmosphäre, durchführt.

4. Verfahren nach einem der vorangehenden Ansprüche, dadurch gekennzeichnet, daß man die Behandlung bei einer Temperatur zwischen 15 °C und 200 °C, vorzugsweise bei einer Temperatur zwischen 20 °C und 60 °C, durchführt.

5. Verfahren nach einem der vorangehenden Ansprüche, dadurch gekennzeichnet, daß man vor und/oder während der Behandlung die Warenbahn mit mindestens einer Substanz imprägniert.

6. Verfahren nach Anspruch 5, dadurch gekennzeichnet, daß man eine solche Substanz auswählt, die die Haftung einer Ausrüstung zu der Warenbahn verbessert.

7. Verfahren nach einem der Ansprüche 5 oder 6, dadurch gekennzeichnet, daß man mehrere Substanzen schichtweise übereinanderliegend auf die Warenbahn aufbringt.

8. Verfahren nach einem der vorangehenden Ansprüche, dadurch gekennzeichnet, daß man vor und/oder während der Behandlung die Warenbahn mit mindestens einem Initiator imprägniert, der durch die Funken- und/oder kurzzeitige Bogenentladung in Radikale und/oder Ionen zerfällt.

9. Verfahren nach Anspruch 8, dadurch gekennzeichnet, daß man einen Initiator auf der Basis eines Persulfates, insbesondere Kaliumpersulfat und/oder Ammoniumpersulfat, eines Peroxides, insbesondere Dibenzoylperoxid, Cumolhydroperoxid, Cyclohexanonperoxid, Di-tert-Butylperoxid, Cyclohexylsulfonylacetylperoxid, eine Azoverbindung, insbesondere Azodiisobuttersäurenitril und/oder einen Initiator auf der Basis von Benzpinakol, Diisopropylpercarbonat und/oder tert.-Butylperoctoat auswählt.

10. Verfahren nach Anspruch 8 oder 9, dadurch gekennzeichnet, daß man als Initiator ein Redoxsystem, insbesondere Caliumpersulfat/Natriumhyposulfit, Wasserstoffperoxid/Eisen-II-Sulfat, Cumolhydroperoxid/Polyamin und/oder Benzoylperoxid/N-Dimethylanilin einsetzt.

11. Verfahren nach einem der vorangehenden Ansprüche, dadurch gekennzeichnet, daß man die Warenbahn vor und/oder während des Auftragens des Initiators und/oder der mindestens einen Substanz durch Aufbringen eines Quellmittels quillt.

12. Verfahren nach einem der Ansprüche 8 bis 11, dadurch gekennzeichnet, daß man den mindestens einen Initiator zusammen mit der mindestens einen Substanz auf die Warenbahn aufbringt.

13. Verfahren nach einem der vorangehenden Ansprüche, dadurch gekennzeichnet, daß man die Funken- und/oder kurzzeitige Bogenentladung in Transportrichtung oder entgegengesetzt zur Transportrichtung der Warenbahn durchführt.

14. Verfahren nach einem der vorangehenden Ansprüche, dadurch gekennzeichnet, daß man die Funken- und/oder kurzzeitige Bogenentladung unter einem Winkel zwischen 75° und 105°, vorzugsweise unter einem Winkel von etwa 90°, relativ zur Transportrichtung der Warenbahn durchführt.

15. Verfahren nach einem der vorangehenden Ansprüche, dadurch gekennzeichnet, daß man zur Erzeugung der Funken- und/oder der kurzzeitigen Bogenentladung eine Gleichspannung oder insbesondere eine Wechselspannung oder eine hochfrequente Spannung anlegt.

16. Verfahren nach einem der vorangehenden Ansprüche, dadurch gekennzeichnet, daß man zur Erzeugung einer Vielzahl von Funken- und/oder kurzzeitigen Bogenentladungen eine einzige Spannungsquelle verwendet.

17. Verfahren nach einem der vorangehenden Ansprüche, dadurch gekennzeichnet, daß man eine Spannungsquelle mit einer Spannung kleiner als 50 kV, insbesondere mit einer Spannung zwischen 2 kV und 25 kV, verwendet.

18. Verfahren nach einem der vorangehenden Ansprüche, dadurch gekennzeichnet, daß man die Behandlung mit der Funken- und/oder kurzzeitigen Bogenentladung während einer Zeit kleiner als 2 Sekunden, vorzugsweise zwischen 0,01 Sekunden und 1,5 Sekunden, durchführt.

19. Verfahren nach einem der vorangehenden Ansprüche, dadurch gekennzeichnet, daß man als Warenbahn ein textiles Flächengebilde, insbesondere eine Web- oder Wirkware, auswählt.

20. Verfahren nach Anspruch 19, dadurch gekennzeichnet, daß man als Warenbahn ein Wolle und/oder Baumwolle enthaltendes textiles Flächengebilde auswählt.

21. Vorrichtung zur Durchführung des Verfahrens nach einem der vorangehenden Ansprüche, wobei die Vorrichtung eine Behandlungseinrichtung aufweist, die ein Transportsystem für die Warenbahn sowie mindestens eine mit Abstand von einer Vielzahl von Gegenelektroden angeordnete Elektrode zur Erzeugung der Funken- und/oder kurzzeitigen Bogenentladung umfaßt, und die mindestens eine Elektrode und die Vielzahl der Gegenelektroden mit einer gemeinsamen Spannungsquelle verbunden sind, wobei jeder Gegenelektrode (5, 6, 7, 7a, 35, 36) mindestens ein erster Kondensator (8, 9, 10, 10a) zugeordnet ist, dadurch gekennzeichnet, daß jeder Gegenelektrode (5, 6, 7, 7a, 35, 36) ein zweiter Kondensator (11) zugeordnet ist und daß der zweite Kondensator (11) jeweils die Gegenelektrode (5) mit der Elektrode (2) verbindet.

22. Vorrichtung nach Anspruch 21, dadurch gekennzeichnet, daß die Behandlungseinrichtung eine Reihe von quer zur Warenbahn (21) angeordneten Gegenelektroden (5, 6, 7, 35, 36) und eine hiermit zusammenwirkende Reihe von entsprechend positionierten Elektroden (2, 3, 23) aufweist.

23. Vorrichtung nach Anspruch 21 oder 22, dadurch gekennzeichnet, daß das Transportsystem aus zwei, mit Abstand voneinander angeordneten Walzen (22, 23) gebildet ist.

24. Vorrichtung nach Anspruch 23, dadurch gekennzeichnet, daß wenigstens eine der beiden Walzen (22, 23) als Elektrode geschaltet ist.

25. Vorrichtung nach Anspruch 21 oder 22, dadurch gekennzeichnet, daß das Transportsystem eine Aufwickelwalze (23) für die Warenbahn (21) umfaßt.

26. Vorrichtung nach Anspruch 25, dadurch gekennzeichnet, daß die Aufwickelwalze (23) als Elektrode geschaltet ist.

27. Vorrichtung nach Anspruch 26, dadurch gekennzeichnet, daß die Aufwickelwalze (23) als Elektrode geschaltet ist und daß eine Reihe von Gegenelektroden (5, 6, 7) mit Abstand von der Walze (23) angeordnet ist und sich über die Gesamtbreite der Warenbahn (21) erstreckt.

28. Vorrichtung nach einem der Ansprüche 21 bis 27, dadurch gekennzeichnet, daß der erste Kondensator (8, 9, 10, 10a) als Koaxialkabel ausgebildet ist.

29. Vorrichtung nach Anspruch 28, dadurch gekennzeichnet, daß die Kapazität des ersten Kondensators (8, 9, 10, 10a) 5 pF bis 5.000 pF, vorzugsweise 100 pF bis 1.500 pF, beträgt.

30. Vorrichtung nach Anspruch 28 oder 29, dadurch gekennzeichnet, daß die Elektroden (2, 3, 4, 23) und die Gegenelektroden (5, 6, 7, 7a, 35, 36) aus einem Metall, insbesondere Aluminium, Eisen, Stahl oder Kupfer, bestehen.

31. Vorrichtung nach einem der Ansprüche 21 bis 30, dadurch gekennzeichnet, daß die Gegenelektrode als eine Reihe von Gegenelektroden (5, 6, 7) ausgebildet ist, wobei sich die Reihe der Gegenelektrode quer über die Breite der Warenbahn (21) erstreckt und jede Reihe der Gegenelektroden (5, 6, 7) eine Vielzahl von Einzelelektroden (35, 36) umfaßt, die jeweils durch einen Isolator (37) voneinander getrennt sind.

32. Vorrichtung nach Anspruch 21, dadurch gekennzeichnet, daß der zweite Kondensator (11) eine Kapazität aufweist, die gleich oder kleiner ist als die Kapazität des ersten Kondensators (8, 9, 10, 10a).

33. Vorrichtung nach Anspruch 32, dadurch gekennzeichnet, daß die Kapazität des zweiten Kondensators (11) 10 bis 90 % der Kapazität des ersten Kondensators (8, 9, 10, 10a) ausmacht.

34. Vorrichtung nach einem der Ansprüche 21 bis 33, dadurch gekennzeichnet, daß die Behandlungseinrichtung eine Vielzahl von mit Abstand voneinander angeordnete Reihen von Gegenelektroden (5, 6, 7) aufweist, die sich über die Warenbahnbreite erstrecken, wobei jede Reihe eine Vielzahl von Gegenelektroden (35, 36) umfaßt, die parallel geschaltet sind und die mit einer gemeinsamen Spannungsquelle (1) verbunden sind.

35. Vorrichtung nach einem der Ansprüche 21 bis 34, dadurch gekennzeichnet, daß die Gegenelektroden (5, 6, 7, 7a, 35, 36) mit einer als Wechselspannung ausgebildeten Spannungsquelle (1) verbunden sind.

36. Vorrichtung nach einem der Ansprüche 21 bis 35, dadurch gekennzeichnet, daß die Spannungsquelle (1) eine Wechselspannung mit einer Frequenz zwischen 5 Hz und 20.000 Hz, vorzugsweise 50 Hz, erzeugt.

37. Vorrichtung nach einem der Ansprüche 21 bis 36, dadurch gekennzeichnet, daß die Spannungsquelle (1) eine Wechselspannung zwischen 500 V und 50 kV, vorzugsweise zwischen 2 kV und 25 kV, erzeugt.

## Claims

1. A method for the treatment of an endless fabric, in particular of such a fabric which is composed of plastic, rubber or textile, wherein said endless fabric is transported with a predetermined speed through a treatment device, which allows the treatment of said endless fabric on its whole surface or according to a predetermined pattern with a spark- or short-term arc-discharge, whereby for the generation of the spark- or short-term arc-discharge at least one electrode is used as well as a multitude of counter electrodes are used being electrically decoupled in such a way that each counter electrode comprises a first capacitor or a resistance, characterized in that for the spark- or short-term arc-discharge such a burning period is chosen that varies between 10⁻¹ s and 10⁻⁸ s, preferably between 10⁻⁶ s and 10⁻² s, and that time course of the spark- or short-term arc-discharge is modified in that way that each counter electrode is connected with the at least one electrode over a second capacitor.

2. The method according to claim 1, characterized in that the treatment is performed in a gas atmosphere at a pressure between 90 x 10³ Pa and 110 x 10³ Pa, preferably at a pressure of about 10⁵ Pa.

3. The method according to claim 1 or 2, characterized in that the treatment is performed in an atmosphere of reactive gases, in particular a hydrogen atmosphere, an oxygen atmosphere and/or a silane atmosphere.

4. The method according to one of the preceding claims, characterized in that the treatment is performed at a temperature between 15 °C and 200 °C, preferably at a temperature between 20 °C and 60 °C.

5. The method according to one of the preceding claims, characterized in that the fabric is impregnated with at least one substance before and/or during the treatment.

6. The method according to claim 5, characterized in that said substance is selected which improves the attachment of a finishing.

7. The method according to one of the claims 5 or 6, characterized in that more substances are applied layer-wise on top of each other onto the fabric.

8. The method according to one of the preceding claims, characterized in that the fabric is impregnated before and/or during the treatment with at least one initiator, which disintegrates by the spark discharge and/or the short-time arc-discharge into radicals and/or ions.

9. The method according to claim 8, characterized in that said initiator is selected from the group comprising of persulfates, in particular potassium persulfate and/or ammonium persulfate, comprising of a peroxide, in particular dibenzoyl peroxide, cumol hydroperoxide, cyclohexanon peroxide, di-tert-butyl peroxide, cyclohexylsulfonylacetyl peroxide, comprising of an azo compound, in particular azodiisobutyronitrile, and/or an initiator on the basis of benzopinacol, diisopropyl percarbonate and/or tert.-butyl peroctoate.

10. The method according to claims 8 or 9, characterized in that the initiator is a redox system, in particular potassium persulfate/sodium hyposulfite, hydrogen peroxide/ Fe(II) sulfate, cumol hydroperoxide/polyamine and/or benzoyl peroxide/N-dimethyl aniline.

11. The method according to one of the preceding claims, characterized in that the fabric is swollen before and/or during the application of the initiator and/or the at least one substance by the application of a swelling agent.

12. The method according to any of the claims 8 to 11, characterized in that the at least one initiator is applied on the fabric together with the at least one substance.

13. The method according to one of the preceding claims, characterized in that the spark discharge and/or the short-time arc discharge is performed in the transport direction or in the opposite of the transport direction.

14. The method according to one of the preceding claims, characterized in that the spark discharge and/or the short-time arc discharge is performed under an angle between 75° and 105°, preferably under an angle of about 90°, relatively to the transport direction of the fabric.

15. The method according to one of the preceding claims, characterized in that the spark discharge and/or the short-time arc discharge is generated by a direct-current power source, an alternating-current power source or a high frequency power source.

16. The method according to one of the preceding claims, characterized in that numerous spark discharges and/or arc discharges are generated by a single electric power source.

17. The method according to one of the preceding claims, characterized in that said power source generates a voltage less than 50 kV, in particular a voltage between 2 kV and 25 kV.

18. The method according to one of the preceding claims, characterized in that the treatment with the spark discharge and/or the short-time arc-discharge is performed during a time period less than 2 sec, preferably between 0,01 and 1,5 sec.

19. The method according to one of the preceding claims, characterized in that the fabric is a textile fabric, in particular a woven fabric or a knitted fabric.

20. The method according to claim 19, characterized in that the fabric is a wool and/or cotton containing textile fabric.

21. A device for the performance of the method according to one of the preceding claims, characterized in that the device contains a treatment unit, which comprises a transport system for the fabric and at least one electrode which is arranged separated from a row of counter electrodes to generate the spark discharge and/or the short-time arc discharge, the at least one electrode and the row of counter electrodes being connected to a common power source, whereby each counter electrode (5, 6, 7, 7a, 35, 36) comprises at least one first capacitor (8, 9, 10, 10a), characterized in that each counter electrode (5, 6, 7, 7a, 35, 36) comprises at least a second capacitor (11) and that the second capacitor respectively connects the counter electrode (5) with the electrode (2).

22. The device according to claim 21, characterized in that the treatment unit contains a row of counter electrodes (5, 6, 7, 35, 36) perpendicular to the fabric (21) and a corresponding row of connected electrodes (2, 3, 23).

23. The device according to claims 21 or 22, characterized in that the transport system constitutes of two separately placed rolls (22, 23).

24. The device according to claim 23, characterized in that at least one of the two rolls (22, 23) is connected as electrode.

25. The device according to claims 21 or 22, characterized in that the transport system contains a take-up roll (23) for the fabric (21).

26. The device according to claim 25, characterized in that the take-up roll is connected as electrode.

27. The device according to claim 26, characterized in that the take-up roll (23) is connected as electrode and the device contains a row of counter electrodes (5, 6, 7) separated from the roll (23), such that it spans the whole width of the fabric (21).

28. The device according to claim 21 to 27, characterized in that the first capacitor (8, 9, 10, 10a) has the form of a coaxial cable.

29. The device according to claims 28, characterized in that the capacity of the first capacitor (8, 9, 10, 10a) is 5 pF to 5000 pF, preferably 100 pF to 1500 pF.

30. The device according to the claims 28 or 29, characterized in that the electrodes (2, 3, 4, 23) and the counter electrodes (5, 6, 7, 7a, 35, 36) are made of a metal, in particular aluminium, iron, steel or copper.

31. The device according to one of the claims 21 to 30, characterized in that the counter electrode is a row of counter electrodes (5, 6, 7), this row of counter electrodes being positioned over the width of the fabric (21), each row of counter electrodes (5, 6, 7) constituting a multitude of single electrodes (35, 36), all being separated from each other by an isolator (37).

32. The device according to claim 21, characterized in that the second capacitor (11) possesses a capacity which is the same as or less than the capacity of the first capacitor (8, 9, 10, 10a).

33. The device according to claim 32, characterized in that the capacity of the second capacitor (11) is 10 to 90 % of the capacity of the first capacitor (8, 9, 10, 10a).

34. The device according to one of the claims 21 to 33, characterized in that the treatment unit contains a multitude of rows of counter electrodes separated from each other (5, 6, 7), positioned over the width of the fabric, whereby each row contains a multitude of counter electrodes (35, 36), which are arranged in parallel and which are connected with one common power source (1).

35. The device according to one of the claims 21 to 34, characterized in that the counter electrodes (5, 6, 7, 7a, 35, 36) are connected with a alternating current power source (1).

36. The device according to one of the claims 21 to 35, characterized in that the voltage source (1) generates an alternating voltage with a frequency of between 5 Hz and 20.000 Hz, preferably 50 Hz.

37. The device according to of the claims 21 to 36, characterized in that the power source (1) generates an alternating voltage between 500 V and 50 kV, preferably between 2 kV and 25 kV.

## Revendications

1. Procédé pour le traitement d'une bande sans fin, en particulier en matière synthétique, en caoutchouc ou en tissu, dans lequel on transporte la bande sans fin à une vitesse prédéterminée à travers un dispositif de traitement dans lequel la bande sans fin est soumise sur toute sa surface ou suivant un motif prédéterminé à une décharge par étincelles et/ou une décharge par arcs de courte durée, dans lequel, pour créer la décharge par étincelles et/ou par arcs de courte durée, on utilise au moins une électrode ainsi que de multiples contre-électrodes qui sont désaccouplées électriquement de telle sorte qu'à chaque contre-électrode sont associés un premier condensateur ou une résistance, caractérisé en ce que l'on choisit pour la décharge par étincelles et/ou par arcs de courte durée une durée d'allumage qui varie entre 10⁻¹ s et 10⁻⁸ s, de préférence entre 10⁻⁶ s et 10⁻² s, et en ce que l'on module le déroulement dans le temps de la décharge par étincelles et/ou par arcs de courte durée en reliant chaque contre-électrode à au moins une électrode par l'intermédiaire d'un deuxième condensateur.

2. Procédé selon la revendication 1, caractérisé en ce que l'on exécute le traitement dans une atmosphère gazeuse à une pression comprise entre 90 x 10³ Pa et 110 x 10³ Pa, et de préférence à une pression d'environ 10⁵ Pa.

3. Procédé selon les revendications 1 ou 2, caractérisé en ce que l'on exécute le traitement dans une atmosphère constituée de gaz réactifs, en particulier dans une atmosphère d'hydrogène, une atmosphère d'oxygène et/ou une atmosphère de silane.

4. Procédé selon l'une des revendications précédentes, caractérisé en ce que l'on exécute le traitement à une température comprise entre 15°C et 200°C, et de préférence à une température comprise entre 20°C et 60°C.

5. Procédé selon l'une des revendications précédentes, caractérisé en ce qu'avant et/ou pendant le traitement, la bande est imprégnée d'au moins une substance.

6. Procédé selon la revendication 5, caractérisé en ce que l'on sélectionne une substance qui améliore l'adhérence d'un apprêt sur la bande.

7. Procédé selon l'une des revendications 5 ou 6, caractérisé en ce que l'on apporte plusieurs substances par couches superposées sur la bande.

8. Procédé selon l'une des revendications précédentes, caractérisé en ce qu'avant et/ou pendant le traitement, la bande est imprégnée d'au moins un amorceur qui se décompose en radicaux et/ou en ions par la décharge par étincelles et/ou par arcs de courte durée.

9. Procédé selon la revendication 8, caractérisé en ce que l'on sélectionne un amorceur à base d'un persulfate, en particulier le persulfate de potassium et/ou le persulfate d'ammonium, d'un peroxyde, en particulier le peroxyde de dibenzoyle, l'hydroperoxyde de cumène, le peroxyde de cyclohexanone, le peroxyde de di-tert-butyle, le peroxyde de cyclohexylsulfonylacétyle, un composé azo, en particulier le nitrile d'acide azodiisobutyrique, et/ou un amorceur à base de benzopinacol, de percarbonate de diisopropyle et/ou de peroctoate de tert-butyle.

10. Procédé selon les revendications 8 ou 9, caractérisé en ce que l'on utilise comme amorceur un système redox, en particulier persulfate de potassium/hyposulfite de sodium, peroxyde d'hydrogène/sulfate de fer II, hydroperoxyde de cumène/polyamine et/ou peroxyde de benzoyle/N-diméthylaniline.

11. Procédé selon l'une des revendications précédentes, caractérisé en ce qu'avant et/ou pendant l'application de l'amorceur et/ou de la substance au moins présente, on fait gonfler la bande par application d'un agent de gonflement.

12. Procédé selon l'une des revendications 8 à 11, caractérisé en ce que l'on applique sur la bande l'amorceur au moins présent en même temps que la substance au moins présente.

13. Procédé selon l'une des revendications précédentes, caractérisé en ce que l'on effectue la décharge par étincelles et/ou par arcs de courte durée dans la direction du transport ou dans la direction opposée à la direction du transport de la bande.

14. Procédé selon l'une des revendications précédentes, caractérisé en ce que l'on effectue la décharge par étincelles et/ou par arcs de courte durée sous un angle compris entre 75° et 105°, de préférence sous un angle d'environ 90°, par rapport à la direction du transport de la bande.

15. Procédé selon l'une des revendications précédentes, caractérisé en ce qu'en vue de la création de la décharge par étincelles et/ou de la décharge par arcs de courte durée, on applique une tension continue ou en particulier une tension alternative ou une tension à haute fréquence.

16. Procédé selon l'une des revendications précédentes, caractérisé en ce qu'en vue de la création d'un grand nombre de décharges par étincelles et/ou par arcs de courte durée, on utilise une seule source de tension.

17. Procédé selon l'une des revendications précédentes, caractérisé en ce que l'on utilise une source de tension présentant une tension inférieure à 50 kV, et en particulier une tension comprise entre 2 kV et 25 kV.

18. Procédé selon l'une des revendications précédentes, caractérisé en ce que l'on effectue le traitement par décharge par étincelles et/ou par arcs de courte durée pendant une durée inférieure à 2 secondes, et de préférence comprise entre 0,01 seconde et 1,5 seconde.

19. Procédé selon l'une des revendications précédentes, caractérisé en ce que l'on sélectionne comme bande un produit textile plat, en particulier un tissu tissé ou un tissu à mailles.

20. Procédé selon la revendication 19, caractérisé en ce que l'on sélectionne comme bande un produit textile plat contenant de la laine et/ou du coton.

21. Dispositif en vue de l'exécution du procédé selon l'une des revendications précédentes, dans lequel le dispositif présente un dispositif de traitement qui comporte un système de transport pour la bande ainsi qu'au moins une électrode disposée à distance de multiples contre-électrodes en vue de la création de la décharge par étincelles et/ou par arcs de courte durée, et l'électrode au moins présente ainsi que les multiples contre-électrodes sont reliées à une source de tension commune, au moins un premier condensateur (8, 9, 10, 10a) étant associé à chaque contre-électrode (5, 6, 7, 7a, 35, 36), caractérisé en ce qu'un deuxième condensateur (11) est associé à chaque contre-électrode (5, 6, 7, 7a, 35, 36), et en ce que le deuxième condensateur (11) relie chaque fois la contre-électrode (5) à l'électrode (2).

22. Dispositif selon la revendication 21, caractérisé en ce que le dispositif de traitement présente une série de contre-électrodes (5, 6, 7, 35, 36) disposées transversalement par rapport à la bande (21) et une série d'électrodes (2, 3, 23) positionnées de manière appropriée et coopérant avec elles.

23. Dispositif selon les revendications 21 ou 22, caractérisé en ce que le système de transport est formé de deux cylindres (22, 23) disposés à distance l'un de l'autre.

24. Dispositif selon la revendication 23, caractérisé en ce qu'au moins l'un des deux cylindres (22, 23) est raccordé comme électrode.

25. Dispositif selon les revendications 21 ou 22, caractérisé en ce que le système de transport comporte un cylindre d'enroulement pour la bande (21).

26. Dispositif selon la revendication 25, caractérisé en ce que le cylindre d'enroulement (23) est raccordé comme électrode.

27. Dispositif selon la revendication 26, caractérisé en ce que le cylindre d'enroulement (23) est raccordé comme électrode et en ce qu'une série de contre-électrodes (5, 6, 7) est disposée à distance du cylindre (23) et s'étend sur toute la largeur de la bande (21).

28. Dispositif selon l'une des revendications 21 à 27, caractérisé en ce que le premier condensateur (8, 9, 10, 10a) est configuré comme câble coaxial.

29. Dispositif selon la revendication 28, caractérisé en ce que la capacité du premier condensateur (8, 9, 10, 10a) vaut de 5 pF à 5000 pF, et de préférence de 100 pF à 1500 pF.

30. Dispositif selon les revendications 28 ou 29, caractérisé en ce que les électrodes (2, 3, 4, 23) et les contre-électrodes (5, 6, 7, 7a, 35, 36) sont réalisées en un métal, en particulier l'aluminium, le fer, l'acier ou le cuivre.

31. Dispositif selon l'une des revendications 21 à 30, caractérisé en ce que la contre-électrode est configurée comme série (5, 6, 7) de contre-électrodes, laquelle série de contre-électrodes s'étend transversalement sur la largeur de la bande (21), et chaque série (5, 6, 7) de contre-électrodes comporte de multiples électrodes individuelles (35, 36) qui sont chacune séparée des autres par un isolateur (37).

32. Dispositif selon la revendication 21, caractérisé en ce que le deuxième condensateur (11) présente une capacité qui est inférieure ou égale à la capacité du premier condensateur (8, 9, 10, 10a).

33. Dispositif selon la revendication 32, caractérisé en ce que la capacité du deuxième condensateur (11) représente de 10 à 90% de la capacité du premier condensateur (8, 9, 10, 10a).

34. Dispositif selon l'une des revendications 21 à 33, caractérisé en ce que le dispositif de traitement présente de multiples séries (5, 6, 7) de contre-électrodes disposées à distance les unes des autres, qui s'étendent sur la largeur de la bande, chaque série comportant de multiples contre-électrodes (35, 36) qui sont raccordées en parallèle et reliées à une source de tension (1) commune.

35. Dispositif selon l'une des revendications 21 à 34, caractérisé en ce que les contre-électrodes (5, 6, 7, 7a, 35, 36) sont reliées à une source de tension (1) configurée comme tension alternative.

36. Dispositif selon l'une des revendications 21 à 35, caractérisé en ce que la source de tension (1) crée une tension alternative à une fréquence comprise entre 5 Hz et 20000 Hz, et de préférence de 50 Hz.

37. Dispositif selon l'une des revendications 21 à 36, caractérisé en ce que la source de tension (1) crée une tension alternative comprise entre 500 V et 50 kV, et de préférence entre 2 kV et 25 kV.
